# EUROPEAN PATENT APPLICATION

(11) **EP 1 338 990 A1**
(43) Date of publication of application: **27.08.2003**
(21) Application number: 01982978.7
(22) Date of filing: 26.10.2001
(51) Int. Cl.: G06F 17/60

(54) **CLEARING METHOD USING A COMMUNICATIONS NETWORK (VARIANTS)**

(30) Priority: 15.11.2000 RU 2000128473
(71) Applicant: Joint Stock Company "General Technologies", Moskow, 123007 (RU)
(72) Inventor: CHERNOMOROV, Sergei, Moskovskaya obl., 140100 (RU); PAVLENKO, Sergei, Moskovskaya obl., 143221 (RU); ZINOVIEV, Sergei, Moscow, 109316 (RU); KOLESNIK, Vladimir, Moscow, 117630 (RU)
(74) Representative: Patentanwälte Zellentin & Partner
(86) International application number: RU0100447
(87) International publication number: WO02041214

(57) **Abstract**

The invention relates to a finance sphere and could be utilized in various industries of national economy to process trading operations by clearing payment using communication network. Technical result is in enhancing a customer security when effecting a purchase and sale transaction by clearing payment using communication network. Variants of the method include steps of: placing the list of offered commodities/works/services into a seller's computer device; indicating requisite elements of the account for payment for these commodities, the requisite elements of the separate account in the transit bank being indicated as the account; viewing said list by the customer; assigning an individual cipher for each payment; paying for the commodities by effecting payment to the separate account; reporting additionally to the transit bank the cipher assigned for payment; giving the commodities/works/services to the customer under condition of reporting said cipher to the seller by the customer; reporting to the transit bank the cipher received from the customer; transferring money to the seller at the rate of the sum of said payment under condition of coinciding the cipher reported to the transit bank by the seller with the cipher received by the transit bank additionally with said payment.

## Description

### Field of the invention

The invention relates to finance sector and could be utilized for performing clearing transactions using communication network (for example, Internet).

### Background of the Invention

At present, a lot of shops exist offering their commodities or services to the customers by placing advertisements of these commodities on Web-sites in Internet. Various methods for effecting purchases in such shops (typically referred to as electronic or Internet shops) are known, which methods differ from each other, in general, by schemes of payment for commodities (services) being purchased by customers. Thus, for example, a method for effecting purchase and sale clearing transactions in real time is known, which method is used in the CyberPlat system for online payments via Internet (see y_{3yeB} A. "CyberPlat - 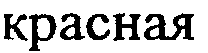 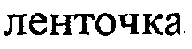 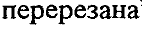 " [Uzouev A. "CyberPlat - the red tape is cut off'] in 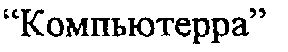 ["Computerra"], 1998, No33, pp. 32-35; see also Russian Patent No 2146836, Int. Cl. G 06 F 17/60, published on March 20, 2000). In said method the customer pays for his/her purchase in the shop by clearing transfer from his/her account to the shop's account, both accounts being operated by the same bank. A purchase and sale transaction in the given method is effected as follows. The customer connects to a shop Web-server via Internet and forms an order, after which the shop sends to the customer a corresponding electronic bill being signed with the electronic digital signature (EDS) of the shop. The customer signs the rendered bill with his/her EDS and sends it back to the shop which, in turn, sends it to the bank. The bank checks the EDSs of the customer and shop, sufficiency of money at the customer's account, and in the case of successful completion of those checks, effects said clearing payment. Then the bank sends to the shop a permission to give the commodity, by receiving which permission the shop gives the commodity to the customer.

A disadvantage of this method consists in a necessity for the customer to hold his/her account in the same bank with the shop. Moreover, the customer is not protected from possible unfair or sharp practices of the shop in regard to the customer when effecting a purchase and sale transaction between them according to this method: the shop does not give the ordered commodity to the customer until money in the extent of order cost enter the shop account, but after such entering of money the shop is not stimulated in any way to fulfil its duties on giving (or delivering) this order to the customer in proper time and with proper quality, which is also a disadvantage of the described method; and, in addition, on receiving said prepayment the shop could even, stopping unexpectedly all activities, abandon to perform the delivery of the commodity at all. The bank would bear only moral responsibility before the customer rather than legal liability. Besides, the described method does not allow the shop to effect purchase and sale transactions with sufficient reliability with the customer's anonymous participation, because in this case the shop has no possibility to determine whether it gives the ordered commodity to the person formed that order.

The closest analog to the present invention is a method for effecting purchase and sale transactions by clearing payment widely utilized in modern Internet shops. This method also assumes a payment for the order formed by the customer in the shop with a clearing transfer from the customer account to the shop account, but unlike the above method, the customer is not obliged to hold his/her account in the same bank with the shop (see http://www.regens.ru/pages/web_shopping.shtmkl).

This method for effecting purchase and sale transactions is realized as follows. The shop creates a Web-page in a computer connected to Internet, then places onto this Web-page a list of offered commodities or services, as well as rules for forming, paying and receiving the orders by the customers. The customer desiring to purchase a commodity or order a service by the method being disclosed enters Internet using the computer, opens the Web-page of the shop, selects a commodity/service from said list, and forms an order indicating personal information (e.g., surname, first and second names, home address) required by the shop, and also contact information (phone number, e-mail address etc.). In addition, the customer indicates a commodity delivery address in the case when he/she desires and is ready to pay for delivering him/her the selected commodity.

The data entered by the customer are then processed with a computer program of the shop. If there are no errors in entered data, said program assigns a number to this order and then sends to the customer computer all essential parameters of this order including its cost and number.

Then the customer instructs his/her bank to effect a clearing transfer at the rate of the given order cost from his/her account in this bank to the shop account. In so doing, the number of this order is indicated in the "comment" field of the corresponding payment document.

On the base of said instruction the customer's bank effects corresponding clearing transfer from the customer's account to the shop account in the shop's bank. The shop's bank after placing this transfer to the shop account creates corresponding reports for the shop. After receiving these reports the shop finds all residual data about that order by the order number indicated in the reports and then compares the transfer sum with the cost of the order, and also checks whether said transfer was placed during the predefined period for prepaying that order. If there are no errors the shop assumes the prepayment as being effected correctly, and begins on this base to prepare the ordered commodity or rendered service for giving to the customer.

Before giving the commodity to the customer the shop representative identifies the customer's person on the basis of any documents of the latter (passport, driver license etc.). If the data indicated in these documents coincides with the corresponding data about the customer indicated in his/her order, then the shop representative gives the executed order to the customer.

The described method, as it was mentioned above, does not oblige the customer to hold his/her account in the same bank with the shop, which is advantageous in comparison with the aforementioned method of effecting purchase and sale transactions in CyberPlat system. But this method keeps other mentioned disadvantages of the aforesaid method: it does not stimulate the shop to fulfil its duties on giving (delivering) the order to the customer in proper time and of proper quality, it does not secure the customer from the shop stopping all activities readily after receiving said prepayment, and also does not allow the shop to effect purchase and sale transactions with sufficient reliability with an anonymous customer.

### Summary of the Invention

The technical problem of the given invention consists in enhancing customer security from aforementioned possible unfair practices of the shop when effecting a purchase and sale transaction by clearing payment using communication network; providing sufficient reliability for such transaction in the case when the customer being effecting that transaction anonymously, and also providing sufficient reliability for such transaction regarding malpractice of one of the parties in this transaction.

Since "work" and "service" in economical sense are both commodities, but specific ones, then hereinafter the phrase "commodity/work/service" would mean a commodity, work, service separately and in any combination of them.

The set technical problem is solved by that in the first variant of the method for trading by clearing payment using the communication network, the method including placing the list of offered commodities/works/services into seller's computer device, the device being connected to the communication network, indicating requisite elements of the account for payment for these commodities/works/services, viewing said list by the customer with the help of computer device connected to the seller's computer device via said communication network, paying by the customer for the commodity/work/service selected by him/her from said list, providing by the seller said commodity/work/service to the customer, the requisite elements of the separate account in transit bank being indicated as said account, prior to paying for selected commodities/works/services the customers assigning an individual cipher for each payment, in order to pay for said commodity/work/service the payment being effected to said separate account, the cipher assigned for that payment being additionally reported to transit bank, providing said commodity/work/service to the customer under condition of reporting said cipher to the seller by the customer, then reporting the cipher received from the customer to the transit bank, transferring money to the seller at the rate of the sum of said payment under condition of coincidence of the cipher reported to the transit bank by the seller with the cipher received by the transit bank additionally with said payment.

One feature of the first variant of the method according to the present invention is in that the seller's computer device is owned by the seller or supplied to the seller for use.

One more feature of the first variant of the method according to the present invention is in that the cipher assigned by the customer is indicated in the payment document accompanying said payment.

The cipher assigned by the customer could be indicated multiply in said payment document.

One more feature of the first variant of the method according to the present invention is that after placing of said payment to said separate account the parameters of that payment could be reported to the seller, the parameters including at least the sum of that payment.

One more feature of the first variant of the method according to the present invention is in that the customer gets said commodity/work/service under condition of providing by this customer to the seller, besides said cipher, the copy of the payment document accompanying said payment.

One more feature of the first variant of the method according to the present invention is in that using the customer's computer device are performed steps of: forming the order to purchase said commodity/work/service and sending said order to the seller's computer device; confirming the receiving of said order by transmitting the corresponding message to the customer's computer device said message indicating the parameters of this order, which parameters include at least the cost of said order and/or the number of said order.

Said cost of the order could be calculated so that the set of predetermined digits of numerical expression of this cost of the order represent said number of the order.

Also, after the step of receiving said order by the seller said cost of the order and/or number of the order could be also reported to the transit bank.

Also, could be performed steps of: including the created cipher of that order into said parameters being reported to the customer; giving said commodity/work/service to the customer including the case of reporting said cipher of the order to the seller by the customer.

Also, in the case of receiving said number of the order by the customer from the seller this number of the order could be reported to the transit bank in addition to said payment.

In that case said number of the order could be indicated in the payment document accompanying said payment.

Said number of the order could be indicated multiply in said payment document.

Also, in that case after receiving said number of the order by the transit bank from the customer this number of the order could be reported to the seller.

Also, in this case could be performed steps of: reporting said number of the order to the transit bank along with the cipher received from the customer, then transferring said money to the seller including the case of coinciding this number of the order with the number of the order received by the transit bank from the customer.

One more feature of the first variant of the method according to the present invention is in that performed are steps of: checking, in the presence of the customer, an authenticity of the cipher being reported by the customer when obtaining said commodity/work/service, said checking being performed by referring the seller to the transit bank with a request to compare this cipher with the cipher received by the transit bank from the customer; and then giving said commodity/work/service to the customer under condition of reporting the identity of said ciphers by the transit bank to the seller.

The parameters of said payment including at least the sum of the payment could be reported to the seller along with the result of said comparison of the ciphers.

Also, in the case of reporting, in addition to said payment, said number of the order to the transit bank by the customer this number of the order received by the transit bank could be reported to the seller along with the result of said comparison of the ciphers.

One more feature of the first variant of the method according to the present invention is in that performed are steps of: providing a possibility of a primary check of the authenticity of cipher being reported to the seller by the customer; performing such check in the presence of the customer without referring to the transit bank, and then giving said commodity/work/service to the customer under condition of determining said authenticity by the seller.

Then could be performed steps of: assigning the cipher with taking into consideration the requirements predetermined by the seller; and checking the cipher reported by the customer for meeting said requirements when giving said commodity/work/service to the customer.

Also, could be performed steps of: reporting a part of the cipher to the seller inter alia data after receiving by the transit bank the cipher assigned by the customer; and checking the presence of this part of the cipher in the cipher reported to the seller by the customer when giving said commodity/work/service to the customer.

Then, could be performed steps of: reporting, inter alia data, the data calculated by the transit bank according to defined algorithm on the basis of this cipher after receiving by the transit bank the cipher assigned by the customer; reporting also to the seller said algorithm along with said data; checking the coincidence of said data with the data obtained by applying said algorithm to the cipher reported to the seller by the customer, when giving said commodity/work/service to the customer.

Then could be performed are steps of: providing technical means to the transit bank and seller in order to create a control code on the basis of the cipher and defined parameters of the customer's payment; creating a primary control code using said technical means on the basis of that cipher and corresponding parameters of said payment after receiving by the transit bank said payment and the corresponding cipher assigned by the customer, and reporting then this primary control code to the seller, reporting said corresponding parameters of said payment to the seller; checking the coincidence of the control code created by the seller using the technical means on the basis of the cipher and said corresponding parameters of said payment being received from the customer with the primary control code received from the transit bank, when giving said commodity/work/service to the customer.

Also, in the case of forming said order by the customer, could be performed steps of: providing technical means to the transit bank and seller in order to create a control code on the basis of the cipher and defined parameters of the customer's payment; reporting to the transit bank the parameters of said payment necessary to calculate the control code; creating a primary control code using said technical means on the basis of the cipher and said corresponding parameters of said payment after receiving by the transit bank the cipher assigned by the customer, and reporting then this primary control code to the seller; checking the coincidence of the control code created by the seller using the technical means on the basis of the cipher and said corresponding parameters of said payment being received from the customer with the primary control code received from the transit bank, when giving said commodity/work/service to the customer.

In these cases, when said technical means for creating the control code on the basis of the cipher and defined parameters of the customer's payment or order being provided to the transit bank and the seller, updated versions of said technical means are provided to their users.

The set problem is also solved by that in the second variant of the method for clearing trading using the communication network, the method including steps of: placing a list of offered commodities/works/services into a seller's computer device connected to the communication network; indicating requisite elements of the account to pay for these commodities/works/services; viewing said list by a customer using a computer device connected to the seller's computer device via said communication network; paying by the customer for the commodity/work/service selected by said customer from said list; giving said commodity/work/service by the seller to the customer, *characterized* in that requisite elements of a separate account in a transit bank being indicated as said account; prior to the step of paying for the selected commodities/works/services the customers assign an individual cipher for each payment; to the customer and the transit bank are provided with technical means for creating a control code using said technical means on the basis of the cipher assigned for this payment; the step of giving said commodity/work/service to the customer is performed under condition of reporting said cipher by the customer to the seller, then reporting the cipher received from the customer to the transit bank; transferring money to the seller at the rate of the sum of said payment under condition of coinciding the control code created by the transit bank using said technical means on the basis of the cipher received from the seller with a primary control code.

One feature of the second variant of the method according to the present invention is in that the seller's computer device is owned by the seller or supplied to the seller for use.

One more feature of the second variant of the method according to the present invention is in that performed are steps of: producing said technical means with possibility to use, inter alia, the defined parameters of the customer's payment to create the control code; utilizing, inter alia, the corresponding parameters of said payment to create the primary control code by the customer, utilizing, inter alia, the corresponding parameters of said payment to create by the transit bank the control code being compared with the primary control code.

One more feature of the second variant of the method according to the present invention is in that the primary control code is indicated in the payment document accompanying said payment.

The primary control code could be indicated multiply in said payment document.

One more feature of the second variant of the method according to the present invention is in that after obtaining said payment to said separate account the parameters of that payment are reported to the seller, said parameters include at least the sum of that payment.

One more feature of the second variant of the method according to the present invention is in that in order to get said commodity/work/service the copy of the payment document accompanying said payment is provided to the seller besides said cipher.

One more feature of the second variant of the method according to the present invention is in that, using the customer's computer device, performed are steps of: forming the order to purchase said commodity/work/service and sending it to seller's computer device; confirming the receiving of said order by transmitting to the customer's computer device the corresponding message indicating the parameters of this order, said parameters including at least the cost of said order and/or the number of said order.

Said cost of the order could be calculated so that the set of predetermined digits of numerical expression of this cost of the order represent said number of the order.

Also, after receiving said order by the seller said cost of the order and/or number of the order could be also reported to the transit bank.

Also, could be performed steps of: including the created cipher of that order into said parameters being reported to the customer; giving said commodity/work/service to the customer including the case of reporting said cipher of the order to the seller by the customer.

Also, could be performed steps of: producing said technical means with possibility to use, inter alia, the defined parameters of the customer's payment to create the control code; including the parameters necessary to calculate the control code into the parameters of said order being reported to the customer; utilizing, inter alia, said necessary parameters of said order to create the primary control code by the customer; utilizing, inter alia, said necessary parameters of said order to create by the transit bank the control code being compared with the primary control code.

Also, in the case of receiving said number of the order by the customer from the seller this number of the order could be reported to the transit bank in addition to said payment.

In that case said number of the order could be indicated in the payment document accompanying said payment.

Said number of the order could be indicated multiply in said payment document.

Also, in this case after receiving said number of the order by the transit bank from the customer this number of the order could be reported to the seller.

Also, in this case could be performed steps of: reporting said number of the order to the transit bank along with the cipher received from the customer; then transferring said money to the seller including the case of coinciding this number of the order with the number of the order received by the transit bank from the customer.

One more feature of the second variant of the method according to the present invention is in that could be performed steps of: sending, in the presence of the customer, the cipher received from the customer to the transit bank for checking, when providing said commodity/work/service to the customer; and then giving said commodity/work/service to the customer under condition of reporting to the seller by the transit bank the identity of the control code created by the transit bank using said technical means on the basis of the corresponding data to the primary control code.

One more feature of the second variant of the method according to the present invention is that could be performed steps of: providing the said technical means also to the seller: reporting, if necessary, the parameters of said payment necessary for calculating the control code to the seller; reporting the control code created using said technical means on the basis of the corresponding data to the transit bank, when providing said commodity/work/service to the customer; and then giving said commodity/work/service to the customer under condition of reporting by the transit bank to the seller the identity of the control code received from the seller to the primary control code.

In those cases, when sending, in the presence of the customer, the cipher received from the customer or the control code to the transit bank for checking, the parameters of said payment including at least the sum of this payment could also be reported along with the result of said check to the seller.

In those cases, when sending, in the presence of the customer, the cipher received from the customer or the control code to the transit bank for checking, under condition of reporting to the transit bank by the customer said number of the order in addition to said payment, the number of the order received by the transit bank from the customer could also be reported to the seller along with the result of said check.

One more feature of the second variant of the method according to the present invention is steps of: providing a possibility of primary check of the authenticity of cipher being reported to the seller by the customer; performing such check in the presence of the customer without referring to the transit bank; and then giving said commodity/work/service to the customer under condition of determining said authenticity by the seller.

Then could be performed steps of: assigning the cipher with taking into consideration the requirements predetermined by the seller; and checking the cipher reported by the customer to the seller for meeting these requirements.

Else, could be performed steps of: providing said technical means also to the seller; reporting, if necessary, the parameters of said payment necessary to calculate the control code to the seller; reporting this primary control code to the seller after receiving by the transit bank said payment and the primary control code; checking the coincidence of the control code created by the seller using said technical means on the basis of corresponding data with the primary control code, when providing said commodity/work/service to the customer.

In that case, could be performed steps of: reporting only a part of the primary control code to the seller; and checking the presence of said part of the primary control code in said control code created by the seller, when giving said commodity/work/service to the customer.

When providing the selected type of said technical means to the customer, the transit bank and, possibly, to the seller in order to create the control code on the basis of the cipher and, possibly, of the given parameters of the payment or the order of the customer, updated versions of these technical means could also be provided to their users.

The set problem is also solved by that in the third variant of the method for trading by clearing payment using the communication network, the method including steps of: placing a list of offered commodities/works/services into a seller's computer device connected to the communication network; indicating requisite elements of the account to pay for these commodities/works/services; viewing said list by a customer using a computer device connected to the seller's computer device via said communication network; paying by the customer for the commodity/work/service selected by said customer from said list; giving said commodity/work/service by the seller to the customer, *characterized* in that requisite elements of a separate account in a transit bank being indicated as said account; providing technical means to the customer to create an analog of the autographic signature; providing technical means to the transit bank for verifying the analog of the autographic signature; in order to pay for said order the payment is effected to said separate account; giving said commodity/work/service to the customer under condition of providing by the customer the analog of the customer' autographic signature to the seller, said signature being created for every transaction using said corresponding technical means; then, in order to receive the money, providing the analog of the autographic signature received from the customer to the transit bank; transferring money to the seller at the rate of the sum of said payment under condition of successful verification of the analog of the autographic signature received from the customer using said corresponding technical means.

One feature of the third variant of the method according to the present invention is that the seller's computer device could be owned by the seller or supplied to the seller for use.

One more feature of the third variant of the method according to the present invention is in that after obtaining said payment to said separate account the parameters of that payment are reported to the seller, said parameters include at least the sum of this payment.

One more feature of the third variant of the method according to the present invention is in that is that in order to get said commodity/work/service, the copy of the payment document accompanying said payment is provided to the seller besides said cipher.

One more feature of the third variant of the method according to the present invention is in that using the customer's computer device performed are steps of: forming the order to purchase said commodity/work/service and sending it to seller's computer device; confirming the receiving of said order by transmitting to the customer's computer device the corresponding message being indicating the parameters of this order, said parameters including at least the cost of this order and/or the number of the order.

Said cost of the order could be calculated so that the set of predetermined digits of numerical expression of this cost of the order represent said number of the order.

Also, after receiving said order by the seller said cost of the order and/or number of the order could be also reported to the transit bank.

Also, could be performed steps of: including the created cipher of that order into said parameters being reported to the customer; giving said commodity/work/service to the customer including the case of reporting said cipher of the order to the seller by the customer.

Also, in the case of receiving said number of the order by the customer from the seller this number of the order could be reported to the transit bank in addition to said payment.

In this case said number of the order could be indicated in the payment document accompanying said payment.

Said number of the order could be indicated multiply in said payment document.

Also, in that case after receiving said number of the order by the transit bank from the customer this number of the order could be reported to the seller.

Also, in this case could be performed steps of: reporting said number of the order to the transit bank along with the analog of the autographic signature received from the customer; then transferring said money to the seller including the case of coinciding this number of the order with the number of the order received by the transit bank from the customer.

One more feature of the third variant of the method according to the present invention is in that could be performed steps of: sending the analog of the autographic signature received from the customer to the transit bank for verifying, when giving said commodity/work/service to the customer; and then giving said commodity/work/service to the customer under condition of reporting to the seller by the transit bank about successful verification of this analog of the autographic signature by the transit bank.

One more feature of the third variant of the method according to the present invention is in that an updated version of said technical means for creating the analog of the autographic signature could be provided to the customer.

One more feature of the third variant of the method according to the present invention is in that an updated version of said technical means for creating the analog of autographic signature could be provided to the transit bank.

One more feature of the third variant of the method according to the present invention is in that could be performed steps of: providing to the transit bank the updated version of said technical means for creating the analog of the autographic signature; verifying the analog of the autographic signature received from the customer using these technical means; giving said commodity/work/service to the customer under condition of successful finishing said verification.

Also, the updated version of said technical means for verifying the analog of the autographic signature could be provided to the seller.

### Detailed Description of the Invention

Method according to the present invention assumes a participation of the following subjects in a trading operation: a seller, a customer and a transit bank. Both the seller and the customer could be an individual or an organization. The given method provides three variants for implementing thereof. First of said variants is implemented as follows.

Prior to the trading operation according to the present method the transit bank and the seller make a contract between each other (inter alia, by accepting the offer), in accordance to which contract the transit bank opens a separate account for accounting the money entering from the customers and being charged to the account of commodities/works/services purchased from the seller.

In order to organize the trading by the method being disclosed the seller utilizes a computer device connected to one or several communication networks. An every device having at least a control unit, a data storage unit and an interface unit with corresponding communication networks, and device being provided with corresponding software (the device of such type could be a personal computer, computer server etc.) could be utilized as said computer device. Said computer device could be owned by the seller or could be supplied to him/her for use by other person (for example, by the operator company of one of said communication networks). Respectively, every public communication network (for example, switching phone network, cable television network, Internet etc.) accessible for the seller and the customers could be utilized as said communication networks. In said computer device the seller places some data structure accessible for the users of said communication networks, the data structure containing a list of the commodities/works/services offered by the seller. Said data structure could also include the rules for paying and receiving the selected commodities/works/services by the customers. Said rules could also be posted by the seller as an advertisement in the office or the selling area of the seller, published in periodical press, brought orally to the customer's notice etc. Said rules contains, inter alia, the requisite elements of said separate account, and also assumes that the customers prior to paying for selected commodities/works/services assign an individual cipher for each payment. These rules could also consider various methods of assigning such cipher by the customer: by own choice, by own choice taking into consideration the requirements presented, using technical means offered to the customer etc.

The customer desiring to effect a purchase by the method being disclosed, in order to access said seller's computer device, uses a computer device similar in consist connected to any one of communication networks utilized by the seller. A personal computer, game consoles, personal cellular communicators, information terminal located in a public place etc. could be utilized as such computer device. Using said computer device the customer initializes a step of sending said data structure from the seller's computer device to that device. After that, the customer displays said list of the commodities/works/services on the screen of the computer device being used by him/her or prints it on the printer connected to this computer device, and then selects a commodity/work/service from that list. Then the customer calculates the cost of this commodity/work/service on the basis of the price (if the price is indicated, otherwise the variant described below of the present method is utilized, which considers a step of forming the order by the customer) and desired number of units of selected commodity or volume of selected work (service).

Then the customer effects a payment to said separate account for a sum at the rate of said cost of the commodity/work/service. This payment could be effected by the customer in various ways. Thus, for example, the customer could enter said sum of the payment by cash to this separate account, or could effect a clearing payment to this separate account from his/her account in some bank etc. In addition to said payment the customer reports to the transit bank the cipher pre-assigned by the customer to that payment. In order to send this message the customer could utilize any of the communication system accessible both for the customer and the transit bank (for example, courier post, switching phone network, Internet etc.). In addition, the customer could indicate that cipher in the payment document accompanying said payment.

After effecting said payment the customer refers to the seller for receiving paid commodity/work/service reporting to the seller the type and number of units of the selected commodity and the volume of selected work (service), and also the corresponding cipher. Only after receiving said cipher from the customer the seller gives said commodity/work/service to the customer. The seller could consider unnecessary to check entering the corresponding sum of money to said separate account. The basis for this could lie, for example, in trust of the seller to the customer or in the respective guarantee to pay for that commodity/work/service possessed by the seller. On the contrary, the seller could establish the order according to which he/she would give the indicated commodity/work/service to the customer only after receiving from the transit bank a message containing parameters of said payment, which parameters include at least the sum of this payment. The transit bank sends said message to the seller either by own initiative (for example, directly after receiving said payment) or in response to the respective request from the seller. Regardless of that, the seller could require the customer, in order to obtain said commodity (work, payment), to provide the copy of the payment document accompanying said payment besides said cipher. This allows the seller to ascertain the correctness of effecting said payment by the customer, and also (in the case when the customer according to the said rules indicates in the payment document the cipher assigned by himself/herself) to ascertain additionally the authenticity of the cipher received from the customer. Thus the seller protects himself/herself from accidental or intended corrupting by the customer the cipher being sent to the seller. Moreover, if said cipher is not indicated in this copy of the payment document, the seller has a right to deny the customer to obtain said commodity/work/service (under condition that the customer was notified about such right of the seller in advance, for example, by said rules).

The seller reports the cipher received from the customer to the transit bank. The latter compares this cipher with the cipher pre-received from the customer, after which, in the case of coincidence of said ciphers, it transfers money to the seller at the rate of the sum of said payment. Such transfer could be effected by clearing transfer from said separate account to the account of the seller in some bank, or by other ways as it is customary in modern banking practice.

As it was mentioned above, the seller acknowledges about the customer's desire to purchase said commodity/work/service only when the customer refers the seller for receiving this commodity/work/service. If, in that case, said commodity/work/service requires rather long-run preparation before giving to the customer (for example, it is being custom-made), then the customer would receive this commodity/work/service with the corresponding delay. In order to minimize this delay the customer could in advance notify the seller about his/her desire to purchase said commodity/work/service. For this purpose, after selecting said commodity/work/service the customer forms using said or similar computer device an electronic order containing the name of the commodity/work/service or other references to it considered by said rules (for example, the cipher of this commodity, work or service established by the seller), the number of units of this commodity or the volume of the work (service) which the customer desire to purchase, and also the following data (in the case when an indication of these data is contemplated by said rules):
- information about the customer (for example, surname, first and second names, passport number, home address - for the customer being a natural person; name of the organization, legal and/or actual address - for the customer being a legal person);
- contact information for feedback with the customer (for example, phone number, e-mail address etc.);
- a delivery address in the case when the customer desires to deliver the ordered commodity to him/her;
- other necessary data.

The customer sends the formed order using the computer device utilized by him/her to the seller's computer device which checks the data received within this order, and in the case of absence of any errors it calculates the cost of this order and also assigns a number to this order. Moreover, the seller's computer device could also assign other parameters to this order, for example: the date of order reception, maximum allowable period for prepaying the order, the term to accomplish the order etc. After that, the seller's computer device sends a message to the customer's computer device, which contains the confirmation of receiving said order, as well as the parameters of this order defined by the seller, including at least the cost of this order and/or its number. Further, the seller's computer device records the parameters of this order into the database of received orders.

In the case, when the seller had established an order according to which he/she would give the ordered commodity/work/service to the customer and even would begin to prepare this commodity/work/service for giving only after correctly effected payment for this commodity/work/service by the customer, then the fact of receiving by the seller from the transit bank the message containing only the sum of said payment, would be insufficient for identifying the order corresponding to this payment. Actually, the coincidence itself of said sum with the cost of said order does not necessarily mean that this payment was effected as a payment precisely for this order due to the following reasons: first, under some conditions the coincidence of the sums of several different orders is possible, second, the customer could mistake in the sum of payment, and finally, this payment could be placed to said separate account by mistake (for example, the sender of this payment indicated the requisite elements of this separate account as an account of the receiver of the payment by mistake). In that case it is necessary for the seller to receive some identifier of the respective order, for example, number of this order. The seller could receive this number of the order as follows. The customer, after receiving the number of said order among the parameters of this order from the seller, reports this number of the order to the transit bank in addition to said payment, and in order to transmit this message the customer could utilize any communication channel from aforementioned ones which are useful for transmitting the cipher assigned by the customer to the transit bank. Moreover, the customer could indicate this number in the payment document accompanying said payment. Then the transit bank could report the number of the order received from the customer to the seller either by own choice (for example, directly after receiving this number of the order) or in response to the corresponding request from the seller. In addition, the transit bank could utilize this number of the order for checking the correctness of effecting the payment of said commodity/work/service by the customer, which checking is described below.

According to the arrangement with the transit bank the seller after receiving the next order could report the cost of this order to the transit bank. Then the transit bank, after receiving said payment, checks the coincidence of the sum of this payment with one of the costs of the order being already received from the seller. If there is no proper cost then the transit bank, considering said payment as being effected by mistake, could transfer the sum of this payment back according to the requisites of the sender (provided that said payment was effected by clearing transfer) or effect other actions, perhaps, after preliminary negotiation with the seller. If the seller reports the numbers of received orders to the transit bank, then after receiving from the customer in addition to said payment the number of said order the transit bank could perform the check of this number of the order, which check being similar to said check of the sum of payment, and could perform the further possible action also similar to above described. Such check become the most effective in the case when the seller reports both the sum and the number of received orders to the transit bank.

As it was mentioned above, since the costs of different orders could coincide, then it is necessary for the seller to refer somehow to said payment in order to receive said money from the transit bank. For this purpose, the seller could report to the transit bank said number of the order along with the cipher received from the customer. In this case the transit bank transfers said money to the seller including the case of coinciding this number of the order with the number of the order received by the transit bank from the customer.

Since the cipher assigned by the customer is unforeknowable, then, in principle, the customer could report the seller a wrong cipher consciously or by mistake when receiving said commodity/work/service. In this case the seller after providing said commodity/work/service to the customer could not receive said money when reporting such cipher to the transit bank. In order to avoid such problem the seller, before giving said commodity/work/service to the customer, could check, in the presence of the customer, an authenticity of the cipher being reported by the latter. For this purpose, the seller sends a request to the transit bank to compare this cipher with the cipher pre-received by the transit bank from the customer. Then the seller provides said commodity/work/service to the customer only after receiving a report on identity of said ciphers from the transit bank.

If, by the time of said check of customer cipher authenticity, the seller still not receive the parameters of said payment from the transit bank, he/she could request them directly during this check. In this case the transit bank reports these parameters to the seller along with the result of said cipher comparison, said parameters including at least the sum of this payment. Similarly, the seller could receive from the transit bank the number of the order pre-received by the transit bank (in the case, when this order was formed during this purchase and sale transaction).

In the case, when said check of the customer cipher authenticity is impossible (for example, due to technical difficulty or unprofitability of establishing a connection with the transit bank for this purpose), the seller could utilize various methods of primary check said cipher for the authenticity. Then, determining said authenticity by the seller in the presence of the customer would be a compulsory condition for further giving said commodity/work/service to the customer. One of possible methods for said primary check consists in that according to this method said rules contains requirements to compose the cipher being assigned by the customer (for example, the cipher should have eight Arabic numerals, first six digits could be optional, and the last two digits represents a number being the sum of previous six digits, etc.). When giving said commodity/work/service to the customer, the seller checks the compliance of the cipher being reported by the customer with said requirements.

A possibility of primary check of the cipher being assigned by the customer for the authenticity could be provided also by other methods. For example, the transit bank after receiving, in addition to said payment, the cipher assigned by the customer reports a part of this cipher (for example, all odd characters of this cipher counted from its left side) to the seller. In this case, when giving said commodity/work/service to the customer, the seller checks the presence of this part of the cipher in the cipher reported to the seller by the customer.

According to the other method of primary check of the cipher of the customer for authenticity the transit bank reports to the seller some data calculated by the transit bank according to some defined algorithm on the basis of the cipher received from the customer. Along with these data the transit bank also reports said algorithm to the seller. When giving said commodity/work/service to the customer, the seller checks the coincidence of said data with the data received by applying said algorithm to the cipher reported by the customer to the seller. In order for the seller to have no possibility to repair, on a fraudulent purpose, the cipher assigned by the customer using said data and algorithm, thereby avoiding the necessity to request this cipher from the customer, and, respectively, to give said commodity/work/service to the customer, the transit bank utilizes such an algorithm to calculate said data, which does not allow to restore unambiguously the primary value of the cipher. The example of such algorithm is a known algorithm for calculating cyclic redundant code by modulo-2-dividing the primary number onto the given polynomial.

Among the described methods for primary check of the cipher of the customer for authenticity the most difficult one in technical regard is a method which stipulates to provide technical means to the transit bank and the seller in order to create a control code on the basis of the cipher and defined parameters of the corresponding customer's payment. These parameters could include, for example, the sum of this payment, the date and the number of the payment document accompanying this payment, the number of said separate account etc. Specific software intended for working on the standard computer, or specific computer (including a calculator) could be utilized as said technical means. In this case, said technical means could be produced and provided to the transit bank and the seller by an independent manufacturer, either the transit bank itself or, on the contrary, the seller himself/herself could be such manufacturer. The transit bank after receiving said payment and the corresponding cipher assigned by the customer creates a primary control code using said technical means on the basis of that cipher and corresponding parameters of said payment, and then reports this primary control code to the seller. The transit bank also reports said corresponding parameters of said payment to the seller. Besides the transit bank, these parameters could be reported to the seller by the customer who could perform this directly after effecting said payment utilizing applicable communication channels for transmitting this message or when obtaining said commodity/work/service from the seller. In the second case the customer could report said parameters to the seller, in particular, by providing to him/her the copy of the payment document accompanying said payment. When giving said commodity/work/service to the customer the seller checks the coincidence of the control code, created by the seller using the technical means on the basis of the cipher and said corresponding parameters of said payment being received from the customer, with primary control code received from the transit bank.

A variation of the latter disclosed method for primary check of the cipher of the customer for authenticity is the method where the technical means are provided to the transit bank and the seller in order to create a control code on the basis of the cipher and defined parameters of the customer's payment. These parameters could include, for example, the cost of this order, the date and the number of this order, the number of units of ordered commodity or volume of ordered work (service) etc. In the given method, on the contrary to the previous one, the customer or the seller reports the parameters of said order necessary for calculating the control code to the transit bank. The transit bank after receiving the cipher assigned by the customer creates a primary control code using said technical means on the basis of that cipher and said corresponding parameters of said order, and then reports this primary control code to the seller. When giving said commodity/work/service to the customer the seller checks the coincidence of the control code, created by the seller using said technical means on the basis of the cipher and said corresponding parameters of said order being received from the customer, with primary control code received from the transit bank.

The operational algorithm of said technical means is not opened, thereby if some version of these technical means being utilized by their users during rather long period of time, then, in principle, said algorithm could be revealed and utilized in fraudulent purposes. Due to this fact, it is worthwhile to provide updated versions of these technical means for their users with some periodicity or, for example, on the basis of the statistics of utilizing these technical means.

As it was mentioned above, one of the methods for the customer to pay for said commodity/work/service is a clearing payment from the customer's account in some bank to said separate account. In order to initialize such payment the customer sends to his/her bank, completed, as a rule, on a paper carrier except the case when this document being sent to the bank in the form of electronic message via negotiated communication channel. In this case regardless of a carrier type this document is drawn according to the form defined either by this bank or by a governing body of those banking system including this bank as a member. By that reason the payment document received in the bank of the customer could be processed by this bank in automated mode, thereby allowing to avoid the errors connected with manual processing of this document by the officer of the bank. As a rule, the computer with the scanner connected to it, and also the corresponding scanning and optical character recognition programs are utilized for said automated processing. Processing of the payment document is effected as follows. The document is scanned, then its image in digital form is provided to the optical character recognition program. This program having a predetermined information about places of the document in which the text units of corresponding purpose (the date and the number of the payment document, the requisite elements of the accounts of sender and receiver, the sum of the payment etc.) recognizes text characters presented in these units and creates a textual file of fixed format containing all significant information from said payment document. Frequently, the documents of poor quality (for example, with indistinct characters) are provided for such processing, and this fact, together with imperfection of some of the character recognition algorithms being utilized at present time, could lead to distortions of the information in the received textual file. It is also known that different elements of typical payment document are protected from such distortions in various degree. For example, the numbers of the accounts and corresponding ciphers of the banks of sender and receiver have strictly defined structure, moreover, a control number is comprised in the numbers of accounts, numerical representation of the sum of the payment is duplicated with its textual equivalent etc. A field being most resistant to such distortions is the comment field of the payment document usually representing a non-structured line of the text having defined length. At the same time the significant information, i.e., the cipher assigned by the customer and/or the number of the order, could be introduced into this comment field. The protectability of said parameters from possible distortions could be enhanced by multiple indications of these parameters in said comment field. For example, if the number of the order or the cipher being indicated three times, then in the case of distortion of some character in one of copy of this number of the order (the cipher) during automated processing of said payment document this character could be restored using undistorted symbols located in the same position in two other copies of this number of the order (the cipher).

The modern banks effects the clearing transfers by transmitting electronic messages of specific formats (so called electronic payment documents, EPD) via corresponding communication networks. The most widely utilized EPDs comprising all significant information from the corresponding primary payment document are called full-format EPDs. But in specific cases (for example, when the sum of the payment is less than the value established by the corresponding banking rules) the shortened-format EPDs could be utilized, these EPDs comprising only that part of significant information from the primary payment document which could be presented in numerical way (for example, the date and the number of this payment document, the numbers of the accounts and the ciphers of the banks of sender and receiver, the sum of the payment. Respectively, the content of the comment field of the primary payment document does not included into shortened-format EPDs, thereby forbidding the customer to use this comment filed for reporting said customer cipher and the number of the order to the transit bank. Nevertheless at least the number of the order could be transmitted by the shortened-format EPDs. For this purpose the seller calculates said cost of the order in such manner that the set of predetermined numbers of numerical representation of this cost of the order represent said number of the order. For example, let the seller establish that the number of the order being represented by four low-order digits of the cost of this order. Then the following algorithm for assigning a number to said order is possible. During the processing of this order the computer device defines the parameters of this order, including its cost which is calculated primarily, as usual, on the basis of the price of the ordered commodity/work/service and on the number of units of this commodity or the volume of the work (service) indicated in the order. Then this computer device searches in said database of received orders for such order (among the orders still being processed by the seller) which number would coincide with indicated digits of the cost of said order. In the case when such order is detected in said database, then the seller's computer device varies said digits until they become unique. On achieving such result the seller's computer device, as it was mentioned above, transmits the parameters of said order to the customer's computer device along with the message containing the confirmation of receiving said order by the seller, and also records these parameters into said database. Just after finishing to process this order (i.e., the ordered commodity/work/service being already given to the customer and the money being received by the seller as the payment for this order), it is marked as already processed in the database, and so the number of this order could be re-utilized by the seller.

The described method for including the number of the order into the numerical representation of the cost of this order could also be useful for the automated processing of the payment documents by the banks, due to the fact that the method allows indicating the number of the order as a member of the sum of the corresponding payment document, which sum due to significant redundancy of its indicating in this document is much less a subject of possible distortions during such processing than other elements of this document.

The method according to the present invention also allows the seller to effect commercial transactions with sufficient reliability when the customer is anonymous. The feature of these transactions consists in that while forming the order the customer does not report any data about himself/herself for the seller, so when further giving the ordered commodity/work/service to the customer the seller has no possibility to ensure that the commodity/work/service being given namely to those person who formed the given order. Said difficulty could be avoided as follows. During processing said order of the customer the seller's computer device assigns to this order a code of this order and includes it into parameters of this order being transmitted to the customer's computer device. Afterwards, the seller gives the ordered commodity/work/service to the customer also under condition of reporting this code of the order to the seller by the customer.
The second of three said variants of the method according to the present invention is implemented as follows. Preparation performed by the transit bank and the seller for effecting purchase and sale transactions is similar with respective preparation described for the first variant of the method being disclosed. In addition to this, the technical means are provided to the customer and the transit bank in order to create a control code on the basis of the cipher. Specialized software intended for working on the standard computer, or specialized computer (including a calculator) could be utilized as said technical means. In this case said technical means could be produced and provided to the customer and the transit bank by an independent manufacturer, or the transit bank itself could be such manufacturer. It is most worthwhile for the customer to utilize the variant of that technical means design in the form of the program for the standard computer because he/she could receive this program as a file via corresponding communication network directly from the manufacturer or from the intermediary agents (including the transit bank or the seller).

Similarly to the first variant of the method being disclosed the customer selects an interesting commodity/work/service from aforementioned list of the commodities/works/services, calculates the cost of this commodity/work/service and effects a payment to aforementioned separate account for a sum at the rate of the cost of this commodity/work/service. Then, at some moment, the customer assigns a cipher on the basis of which a primary control code is calculated using said technical means, after which he/she reports this primary control code to the transit bank in addition to said payment while utilizing, in order to send this message, any of the corresponding communication systems mentioned in the first variant of the method being disclosed. Besides that, the customer could indicate this primary control code in the payment document accompanying said payment.

After effecting said payment the customer refers to the seller in order to receive paid commodity/work/service. The conditions under which the seller gives said commodity/work/service to the customer and also the sequence of operations being effected by the customer and the seller are similar to the corresponding conditions and sequence of operations described for the first variant of the method being disclosed (in so doing, it is possible as well to report the parameters of said payment, including at least the sum the payment, by the transit bank to the seller). In the case when in order to receive the commodity/work/service the customer by the requirement of the seller provides, inter alia data, a copy of the payment document accompanying said payment to the seller, then the seller thus could only ascertain the correctness of effecting said payment by the customer but not to receive said cipher from the customer because the given variant of the method according to the present invention does not stipulate indicating by the customer in the corresponding payment document the cipher assigned by the customer.

The seller reports the cipher received from the customer to the transit bank. The latter creates a control code on the basis of that cipher using said technical means and then compares this control code with the primary control code. After this, in the case of coinciding said control codes the transit bank transfers the money at the rate of the sum of said payment to the seller. Such transfer could be effected by the clearing transfer from said separate account to the account of the seller in some bank or in other ways customary in modern banking practice.

So, as in the first variant of the method being disclosed, the customer could form an order for purchasing said commodity/work/service. The content of this order (including the cost and the number of this order) and also the sequence of operations being effected by the customer and the seller when forming this order are similar to the content of the order and corresponding sequence of operations described for the first variant of the method being disclosed.

As in the first variant of the method being disclosed, the customer after receiving the number of said order from the seller among the parameters of this order could report this number to the transit bank in addition to said payment. Besides, the customer could similarly indicate this number of the order in the payment document accompanying said payment. Then the transit bank could similarly report the number of the order received from the customer to the seller either by own choice (for example, directly after receiving this number of the order) or in response to the corresponding request from the seller. Moreover, the transit bank could utilize this number of the order for the check of correctness of effecting the payment of said commodity/work/service by the customer, which check is described below.

According to the arrangement with the transit bank the seller, after receiving the next order, could report the cost and/or the number of this order to the transit bank. In this case the transit bank could, as in the first variant of the method being disclosed, check the correctness of effecting said payment by the customer by the way of comparing the sum of this payment and/or number of this order received from the customer in addition to this payment (only in the case when this number was reported to the transit bank by the customer) with the cost and/or the number of this order received from the seller, and, after this, could effect some actions similar to ones described for the first variant of the method being disclosed depending on the results of said comparison.

In order to unambiguously refer to said payment for receiving said money from the transit bank the seller could, as in the first variant of the method being disclosed, report said number of the order along with the cipher received from the customer to the transit bank. In this case the transit bank transfers similarly said money to the seller, including the case of coincidence of this number of the order with the number of the order received by the transit bank from the customer.

Due to the fact, that said technical means utilize only the cipher to create the control code, in the case when the customer have assigned for the next payment the cipher already utilized by him/her, then the control code created by the customer on the basis of similar cipher would also repeat. If the seller informed about this feature of said technical means receives the control code previously occurred from the transit bank in order to effect the operation being described below, then he/she could thus determine said cipher of the customer and, as a consequence, utilize the knowledge of this cipher in fraudulent purposes (namely, to present this cipher to the transit bank and receive said money without giving said commodity, work or service to the customer). Taking this into consideration, it is worthwhile to produce said technical means with a possibility to utilize, besides the cipher, also the predetermined parameters of the payment of the customer to create the control code. In this case it is desirable to include into this predetermined parameters those of parameters of the payment that forms a unique combination non-repeated from payment to payment, for example, the date and the number of the payment document accompanying said payment. Besides this, the sum of the payment, the number of said separate account etc. could be included into these predetermined parameters. As a result, from payment to payment the control code calculated using technical means modified in said way would not repeat even if the customer would assign the same cipher for the next payment. Respectively, now the customer utilizes, besides the cipher, also the corresponding parameters of said payment in order to create the primary control code, and the transit bank utilizes the same parameters for creating the control code being compared with the primary control code.

In the case, when in the limits of the second variant of the method being disclosed purchase and sale transaction is accompanied with the forming of the payment, then for aforementioned reasons it is possible to produce such a version of said technical means in which the predetermined parameters of the order of the customer are also utilized, besides the cipher, to create the control code. First of all, the date and the number of the payment should be included into these parameters, and also the cost of the order, the number of units of the ordered commodity or the volume of the ordered work (service) could be included into these parameters. In this case the corresponding parameters of said order are utilized by the customer to create the primary control code and by the transit bank to create the control code being compared by the transit bank with the primary control code. In this case the transit bank receives said corresponding parameters of this order either from the seller after receiving this order by the seller or from the customer after receiving the parameters of his/her order from the seller by the customer.

In the variant of the method according to the present invention being described the seller in the presence of the customer could, as in the first variant, report the cipher received from the customer to the transit bank for checking, when giving said commodity/work/service to the customer. The transit bank on the basis of corresponding data including the cipher received from the seller creates the control code using said technical means and compares it with the primary control code, and further reports the result of this comparison to the seller. The seller gives said commodity/work/service to the customer only after receiving the report on identity of said ciphers from the transit bank.

In the case when said technical means are provided not only to the customer and the transit bank but also to the seller, then the seller has one more method for checking the cipher received from the customer with direct participation of the transit bank. If said technical means are intended to create the control code with utilizing the given parameters of the payment of the customer, then in order to effect such check the customer or the transit bank reports preliminarily to the seller the parameters of said payment, which parameters being necessary to calculate the control code. The seller on the basis of corresponding data including the cipher received from the customer creates the control code using said technical means, and then sends this control code to the transit bank for checking. The transit bank compares the control code received form the seller with the primary control code, and reports the result of this comparison to the seller. The seller gives said commodity/work/service to the customer only after receiving the report on identity of said control codes from the transit bank.

So, as in the first variant of the method according to the present invention, the transit bank could, if necessary, also report the seller the parameters of said payment along with the result of said check, which parameters include at least the sum of this payment, as well as, if necessary, the number of the order pre-received from the customer by the transit bank.

In the case, when either it is not advantageous to effect any of said checks for authenticity or it seems technically difficult, then the seller could utilize various methods to check said cipher for authenticity, as in the first variant of the method being disclosed. Then the determination of said authenticity by the seller in the presence of the customer would be a compulsory condition for further giving said commodity/work/service to the customer. For example, the method for said primary checking is possible, described in the first variant of the method according to the present invention, which method assumes that the seller includes some requirements on forming the cipher assigned by the customer into said rules. Respectively, while giving said commodity/work/service to the customer the seller checks the compliance of the cipher being reported by the customer with said requirements.

One more method for said primary check of the cipher of the customer for authenticity is possible, which method assumes providing said technical means not only to the customer and the transit bank but also to the seller. If said technical means are intended to create the control code with utilizing the given parameters of the payment of the customer, then in order to effect such check the customer or the transit bank reports preliminarily to the seller the parameters of said payment, which parameters are necessary to calculate the control code. The transit bank after receiving said payment and the primary control code reports this control code to the seller. When giving said commodity/work/service to the customer the seller on the basis of corresponding data including the cipher received from the customer creates the control code using corresponding technical means, and then checks the coincidence of this control code with primary control code being pre-received from the transit bank.

As it was mentioned above, in the variant of the method being disclosed according to the present invention the transit bank does not receive the cipher as in the first variant of this method but the primary control code being created on the basis of this cipher. Therefore, if the seller presents to the transit bank a cipher allowing to create the control code using said technical means, the control code being the same with the primary control code, then the transit bank believes the cipher received form the seller as authentic. In principle, the possibility of matching the cipher by the seller himself/herself is not excluded. Then he/she could present this cipher to the transit bank and receive said money without giving any said commodity/work/service. In order to exclude such situation within the frame of above described procedure of the primary check, the transit bank could report to the seller not the complete control code but only its part (for example, odd characters of this cipher counted from its left side). In this case, when giving said commodity/work/service to the customer, the seller checks the presence of this part of the primary control code in said control code being created by the seller using said technical means on the basis of corresponding data including the cipher received from the customer.

So, as in the first variant of the method being disclosed, in this variant of the method it is assumed that the operational algorithm of said technical means is not opened, therefore due to the same reasons it is worthwhile to provide updated versions of these technical means for their users with some periodicity or, for example, on the basis of the statistics of utilizing these technical means.

In the case when the customer during forming said payment document indicates the primary control code and/or aforementioned number of the order in it, and the transit bank processes such payment document in an automated mode, then due to errors possible with such processing, which were mentioned in description of the first variant of the method being disclosed, it is similarly worthwhile to indicate the primary control code and/or the number of the order multiple times in this payment document.

In the case when the order of effecting purchase and sale transactions established according to the given method assumes to send said number of the order to the transit bank by the customer by the way of indicating this number of the order in the payment document accompanying said payment, and the bank of the customer utilizes shortened-format EDS for effecting such payment due to the reasons indicated in the first variant of the method being disclosed, then the seller could calculate said cost of this order with the algorithm described in the first variant of the method being disclosed, so that the set of digits of numerical expression of this cost of the order would represent said number of the order, the digits being predetermined by the seller.

In order to reduce the risk of effecting trade transactions with anonymous customer the seller could, as in the first variant of the method according to the present invention, assign a code to said order and include the code of this order into parameters being reported to the customer. Then the seller further gives the ordered commodity/work/service to the customer also including the case of reporting this code of the order to the seller by the customer.

In the above described first and second variants of the method according to the present invention, in order to receive the money for the commodity/work/service given to the customer, the seller have presented the cipher for the verification to the transit bank, which cipher have been received before by the seller from the customer in exchange for said commodity/work/service. The third variant of the method according to the present invention assumes that when giving said commodity/work/service to the customer the seller receives some information of a certain format from the customer, which information he/she then sends to the transit bank for receiving said money. In turn, the transit bank utilizing the corresponding technical means could determine with sufficient degree of authenticity, whether this information was created namely by the customer, i.e., whether it is an analog of the autographic signature (AAS) of the customer. Hereinafter in the present invention these technical means will be referred to as technical means for verifying the AAS. Respectively, the technical means utilized by the customer for creating the analog of his/her autographic signature will be referred to as technical means for creating the AAS.

The concept of the analog of the autographic signature (AAS) is known, in particular, it is established in a series of legislative acts (see, for example, Civil Code of Russian Federation, part 1, section 160). AAS is utilized in modern business practice pari passu with the autographic signature. Various types of AASs are known. Thus, AASs created by a facsimile reproducing of the autographic signature in mechanical way (for example by applying onto paper the print of the copy of the autographic signature cut out on a rubber stamp) or in electrical way (for example, by applying an image of the original signature using facsimile apparatus or copier) could be separate into separate group. Verification of AAS of this group is effected by a simple visual comparison of the image of the particular AAS with the corresponding sample of the original signature. Since the person effecting such verification should have said sample of the original signature at his/her disposal, then AASs of this group are most often utilized in the cases when a regular exchange of the documents between the participants of particular transaction or agreement is assumed. In this case primary documents on this transaction or the agreement could be signed by said participants autographically, and all further documents could be attested by these participants with their AASs. Respectively, AASs of this group are poorly useful for effecting one-time transaction being effected even without direct contact between the participants (transactions in electronic commerce could be classified namely as such transactions).

In order to effect one-time transactions, more useful is another type of AAS representing a digital array of definite size which array being created by defined computational algorithm (creating algorithm) being a part of said technical means for creating AAS (AAS of this type is also referred to as electronic digital signature, EDS). Input parameters of this algorithm are the following: a document being signed and presented in electronic form, and some number assigned by the customer (so called closed key). As a rule, for the purpose of creating an EDS, the document being signed, which size is less than the value determined by that algorithm, is added up to said value with the definite numerical sequence, thereby allowing to sign even empty documents, if necessary.

Two main schemes exist to create and further verify the EDS: symmetrical and asymmetrical. In the symmetrical scheme, the EDS is created on the basis of primary document and the closed key by said creating algorithm. In this case the closed key could, in principle, be devised by the author of this EDS so that the cipher would have the size defined by this algorithm. Verification of this EDS is effected by other computational algorithm (verifying algorithm) corresponding to said creating algorithm and utilizing the same primary document and the closed key. In practice, said algorithms are rather complicated, thus they are realized on the basis of computer means. Thus, in the symmetrical scheme, the technical means for creating AAS consists of the following: said EDS creating algorithm being implemented on the basis of computer means, and the corresponding closed key. Respectively, technical means for verifying AAS consists of the following: said EDS verifying algorithm being also implemented on the basis of computer means, and the same closed key.

The mentioned asymmetrical scheme is some more complicated than symmetrical. First, a pair of keys, closed and open, is generated by corresponding computational algorithm (generating algorithm). These keys should be correlated with each other in the certain way, thus there generation is effected in the single cycle of the operation of said generating algorithm. Then, as in the symmetrical scheme, this closed key and the primary document are utilized for creating EDS using corresponding creating algorithm. Further verifying this EDS is effected by corresponding verifying algorithm utilizing the same primary document and said open key for that purpose. Thus, in the asymmetrical scheme, the technical means for creating AAS consists of the following: said closed and open keys generating algorithms and EDS creating algorithm being all implemented on the basis of computer means, and said closed key. Respectively, technical means for verifying AAS consists of the following: said EDS verifying algorithm being also implemented on the basis of computer means, and said open key.

Due to aforementioned legal significance of the concept of the analog of the autographic signature, several AAS creating and verifying algorithms are established by national standards of some countries (see, for example, ΓOCT (Russian State Standard) P 34.10-94) and, thereby, are open algorithms. At the same time, in the modern algorithms for such purpose the mathematical methods are utilized ensuring impossibility to recover by fraudulent the closed key utilized for creating any AAS in any way except linear search through all possible values of this closed key even when said fraudulent have this AAS and corresponding primary document. And in order the supposed time cost for such linear search to exceed some period, after which expiration it would become inexpedient to reveal this key, the length of the closed key is selected rather long and could further increase with increasing efficiency of modern computers. Taking this into consideration, the only way to avoid AAS of any person is to protect the closed key utilized by this person for creating AAS from compromising (i.e. revealing it to outsiders). Obviously, the degree of protectability of the closed key from the compromising in symmetrical and asymmetrical schemes is different. Actually, as it was mentioned above, in the symmetrical scheme the closed key is utilized both for creating and verifying AAS. Hence, the person creating AAS using the closed key should further somehow transmit said closed key to the receiver of said AAS for its further verification. From the point of view of possible compromising the closed key, just the channel for such transmission is the weakest link. At the same time, in the asymmetrical scheme AAS is created using the closed key (which is not sent to anyone) and verifying this AAS is effected using corresponding open key which could be transmitted via public communication channels without any risk, because it allows only to verify AAS but not to create it. Hence, when effecting purchase and sale transactions according to the present invention utilizing the asymmetrical scheme, the customer could generate a pair "open key - closed key" only one time, and then report this open key to the transit bank also only one time, after which it would be necessary for the customer to create only individual AAS for every new transaction.

The last of the three aforementioned variants of the method according to the present invention is implemented as follows. Preparation performed by the transit bank and the seller for effecting purchase and sale transactions is similar with respective preparation described for the first variant of the method being disclosed. In addition to this, the technical means are provided to the customer to create AAS, and the technical means to verify AAS corresponding to these technical means are provided to the transit bank. As it was mentioned above, the types of both the former and the latter technical means depends on the type of AAS utilized in the given variant of the method being disclosed. In particular, if the customer and the transit bank utilize the electronic digital signature, and the EDS creating and verifying algorithms (and also the closed and open keys generating algorithm in the case of asymmetrical scheme) are implemented in the form of programs run on a standard computer, then said programs could be produced and provided to the customer and the transit bank by an independent manufacturer, or the transit bank itself could be such manufacturer. The customer could receive necessary programs as files via corresponding communication network directly from the manufacturer or from the intermediary agents (including the transit bank or the seller).

After receiving said technical means to create AAS it could be necessary for the customer to send some additional information to the transit bank depending on the type of AAS utilized in the third variant of the method being disclosed. In particular, when utilizing EDS within the frame of symmetrical scheme, the customer sends his/her closed key to the transit bank. Within the limits of asymmetrical scheme the customer first creates both closed and open keys using technical means for creating AAS, and then sends this open key to the transit bank. As it was mentioned above, the customer could effect this transmitting of closed (or open) key only once, or he/she could transmit this open key to the transit bank in regard with every new purchase and sale transaction.

Further, as in the previous variants of the method being disclosed, the customer selects an interesting commodity/work/service from aforementioned list of the commodities/works/services, calculates the cost of this commodity/work/service and effects a payment to aforementioned separate account for a sum at the rate of the cost of this commodity/work/service. After effecting said payment the customer refers to the seller in order to obtain the paid commodity/work/service while reporting the type and number of units of the selected commodity and the volume of selected work (service) to the seller. Except this, the customer presents to the customer his/her AAS created by the customer using corresponding technical means either preliminarily or in the presence of the seller. Only after receiving this AAS from the customer the seller gives said commodity/work/service to the customer. So, as in the previous variants of the method being disclosed, the seller could consider unnecessary to check an income of the corresponding sum of money to said separate account. The basis for this could lie, for example, in a trust of the seller in regard to the customer or in the corresponding guarantee to pay for that commodity/work/service possessed by the seller. On the contrary, the seller could establish the order according to which he/she would give the said commodity/work/service to the customer only after receiving from the transit bank a message containing parameters of said payment including at least the sum of this payment. The transit bank sends said message to the seller either by own initiative (for example, directly after receiving said payment) or in response to the corresponding request from the seller. Regardless of that, the seller could require the customer, in order to obtain said commodity (work, payment), to provide the copy of the payment document accompanying said payment besides said AAS. This allows the seller to ensure the correctness of effecting said payment by the customer.

The seller presents AAS received from the customer to the transit bank. The latter utilizing said technical means for verifying AAS verifies this AAS. And in this case, as it was mentioned, due to the type of AAS utilized in this variant of the method according to the present invention the consist of these technical means for verifying AAS could vary. In particular, if EDS was created by the customer within the symmetrical scheme, then the transit bank utilizes the closed key pre-received from the customer for verifying this EDS. In the case when the transit bank verifies EDS of the customer within the asymmetrical scheme, it utilizes the open key pre-received from the customer. In this case said open key could also be sent to the transit bank in addition to said payment by any of methods by which the customer have reported the cipher assigned by the customer to the transit bank (in the first variant of the method according to the present invention) or the primary control code created by him/her on the basis of this cipher (in the second variant of the method according to the present invention). If the verification effected by the transit bank leads it to expect that the given AAS actually belongs to the customer, then the transit bank transfers the money to the seller at the rate of the sum of said payment. Such transfer could be effected by the clearing transfer from said separate account to the account of the seller in some bank, or by other ways as it is customary in modern banking practice.

The aforementioned step of providing the copy of the payment document accompanying said payment to the seller by the customer allows the customer to avoid the fraudulent practice at the seller end (meaning, in this case, an electronic copy of this document). Actually, in the case when the customer sends his/her EDS created on the basis of empty document to the seller in order to obtain said commodity/work/service, and the customer utilizes the same closed key to create EDS from transaction to transaction, then EDS of the customer would also be same from transaction to transaction. If the seller knows this feature of procedure of creating his/her EDS by the customer, then next time the seller could present previous EDS of the customer (in fact, the same) to the transit bank to receive said money, and thus the seller has no necessity to give the commodity/work/service paid by the customer to him/her. If the customer creates his/her EDS on the basis inclusive also the electronic copy of the next payment document, the content of which vary from transaction to transaction, then even in utilizing the same closed key by the customer, EDS would be new in every case, thereby making impossible the described fraudulent practice.

So, as in the first two variants of the method being disclosed, the customer could form an order for purchasing said commodity/work/service. The content of this order (including the cost and the number of this order) and also the sequence of operations being effected by the customer and the seller when forming this order are similar to the content of the order and respective sequence of operations described for the first two variants of the method being disclosed.

As in the first two variants of the method being disclosed, the customer after receiving the number of said order from the seller among the parameters of this order could report this number to the transit bank in addition to said payment. Besides, the customer could similarly indicate this number of the order in the payment document accompanying said payment. Then the transit bank could similarly report the number of the order received from the customer to the seller either by own choice (for example, directly after receiving this number of the order) or in response to the corresponding request from the seller. Moreover, the transit bank could utilize this number of the order for the check of correctness of effecting the payment of said commodity/work/service by the customer, which check is described below,.

According to the arrangement with the transit bank, the seller could, after receiving the next order, report the cost and/or the number of this order to the transit bank. In this case the transit bank could, as in the first two variants of the method being disclosed, check the correctness of effecting said payment by the customer by the way of comparing the sum of this payment and/or number of this order received from the customer in addition to this payment (only in the case when this number was reported to the. transit bank by the customer) with the cost and/or the number of this order received from the seller, and, after this, could effect some actions similar to ones described for the first two variants of the method being disclosed depending on the results of said comparison.

In order to unambiguously refer to said payment for receiving said money from the transit bank, the seller could report said number of the order along with the AAS received from the customer to the transit bank. In this case the transit bank transfers said money to the seller, including the case of coincidence of this number of the order with the number of the order received by the transit bank from the customer.

The seller, when giving said commodity/work/service to the customer, could send AAS received from the customer to the transit bank for verifying. This allows the seller even before giving the commodity/work/service to ensure that the customer sent him/her the authentic AAS. If the indicated AAS is formed on the basis of some not-empty document, then, respectively, the seller also receives and sends this document to the transit bank (as it was mentioned, the electronic copy of said payment document could be such document). The transit bank operatively effects the verifying of this AAS using said technical means for verifying AAS, and immediately reports the results of this verification to the seller. Then the seller gives said commodity/work/service to the customer under condition of receiving the report about successful verifying this AAS from the transit bank.

If said technical means for verifying AAS is also provided to the seller, then the seller could verify AAS of the customer by himself/herself without resorting to the transit bank services. The seller could obtain said technical means either from the same sources and via same channels as the transit bank, or from the transit bank directly, if it is the manufacturer of these technical means. In this case the seller verifies AAS received form the customer in the presence of the latter using said technical means for verifying AAS, and further he/she gives said commodity/work/service under condition of successful finishing this verification.

Even in the case, when open algorithms underlay the work of said technical means for creating and verifying AAS, then due to various reasons a necessity to update the version of some of said technical means could occur (for example, in order to correct the errors found in these technical means during operation, in order to accelerate their actions etc.). In this case, when updating said technical means for creating AAS, its manufacturer provides the updated versions of these technical means to the customer. Regardless of that, when updating said technical means for verifying AAS, its manufacturer provides the updated versions of these technical means to the transit bank and even to the seller in those case where the latter also utilizes them. It is obvious, that said updates could be effected so that normal joint use of the updated versions of said technical means with their previous versions should be provided (at least during some transitional period), especially in the case when said technical means for creating AAS and verifying AAS are produced by different manufacturers.

In the case, when the customer during forming said payment document indicates the primary control code and/or aforementioned number of the order in it, and the transit bank processes such payment document in an automated mode, then due to errors mentioned in description of the first variant of the method being disclosed, which are possible in such processing, it is similarly worthwhile to indicate the primary control code and/or the number of the order multiple times in this payment document.

In the case, when the order of effecting purchase and sale transactions established according to the given method assumes to send said number of the order to the transit bank by the customer by the way of indicating this number of the order in the payment document accompanying said payment, and the bank of the customer utilizes shortened-format EDS for effecting such payment due to the reasons indicated in the first variant of the method being disclosed, then the seller could calculate said cost of this order with the algorithm described in the first variant of the method being disclosed, so that the set of digits of numerical expression of this cost of the order would represent said number of the order, which digits being predetermined by the seller.

In order to reduce the risk of effecting trade transactions with anonymous customer the seller could, as in the first two variants of the method according to the present invention, assign a code to said order and include the code of this order into parameters being reported to the customer. Then the seller further gives the ordered commodity/work/service to the customer including the case of reporting this code of the order to the seller by the customer.

The above described invention allows to enhance the protectability of the customer from said possible unfair practice of the shop when effecting purchase and sale transactions for the clearing payment utilizing the communication network, to ensure sufficient reliability of this transaction in the case when the customer effects that transaction anonymously, and also to ensure sufficient reliability for such transaction regarding malpractice of one of the parties in this transaction.

## Claims

1. A method for clearing trading using a communication network, the method including steps of: placing a list of offered commodities/works/services into a seller's computer device connected to the communication network; indicating requisite elements of the account to pay for these commodities/works/services; viewing said list by a customer using a computer device connected to the seller's computer device via said communication network; paying by the customer for the commodity/work/service selected by said customer from said list; giving said commodity/work/service by the seller to the customer, ***characterized* in that** requisite elements of a separate account in a transit bank being indicated as said account; prior to the step of paying for the selected commodities/works/services the customers assign an individual cipher for each payment; in order to pay for said commodity/work/service the payment is effected to said separate account, the cipher assigned for that payment being additionally reported to the transit bank; the step of giving said commodity/work/service to the customer is performed under condition of reporting said cipher by the customer to the seller, then reporting the cipher received from the customer to the transit bank; transferring money to the seller at the rate of the sum of said payment under condition of coinciding the cipher reported to the transit bank by the seller with the cipher received by the transit bank additionally to said payment.

2. The method according to claim 1, ***characterized* in that** the seller's computer device is owned by the seller or supplied to the seller for use.

3. The method according to claim 1, ***characterized* in that** the cipher assigned by the customer being indicated in the payment document accompanying said payment.

4. The method according to claim 1, ***characterized* in that** the cipher assigned by the customer is indicated multiply in said payment document.

5. The method according to claim 1, ***characterized* in that** after obtaining said payment to said separate account the parameters of that payment are reported to the seller, said parameters including at least the sum of that payment.

6. The method according to claim 1, ***characterized* in that** in order to get said commodity/work/service the seller is provided, besides said cipher, with the copy of the payment document accompanying said payment.

7. The method according to claim 1, ***characterized* in that** the customer's computer device are performed using the steps of: forming the order to purchase said commodity/work/service and sending said order to the seller's computer device; confirming the receiving of said order by transmitting the corresponding message to the customer's computer device said message indicating the parameters of this order, which parameters include at least the cost of said order and/or the number of said order.

8. The method according to claim 7, ***characterized* in that** said cost of the order is calculated so that the set of predetermined digits of numerical expression of this cost of the order represent said number of the order.

9. The method according to. claim 7, ***characterized* in that** after the step of receiving said order by the seller said cost of the order and/or number of the order are also reported to the transit bank.

10. The method according to claim 7, ***characterized* in that** performed are the steps of: including the created code of that order into said parameters being reported to the customer; giving said commodity/work/service to the customer including the case of reporting said code of the order to the seller by the customer.

11. The method according to claim 7, ***characterized* in that** in the case of receiving said number of the order by the customer from the seller this number of the order is reported to the transit bank in addition to said payment.

12. The method according to claim 11, ***characterized* in that** said number of the order is indicated in the payment document accompanying said payment.

13. The method according to claim 12, ***characterized* in that** said number of the order is indicated multiply in said payment document.

14. The method according to claim 11, ***characterized* in that** after receiving said number of the order by the transit bank from the customer this number of the order is reported to the seller.

15. The method according to claim 11, ***characterized* in that** performed are steps of: reporting said number of the order to the transit bank along with the cipher received from the customer, then transferring said money to the seller including the case of coinciding this number of the order with the number of the order received by the transit bank from the customer.

16. The method according to claim 1 or 11, ***characterized* in that** performed are steps of: checking, in the presence of the customer, an authenticity of the cipher being reported by the customer when obtaining said commodity/work/service, said checking being performed by referring the seller to the transit bank with a request to compare this cipher with the cipher received by the transit bank from the customer; and then giving said commodity/work/service to the customer under condition of reporting the identity of said ciphers by the transit bank to the seller.

17. The method according to claim 16, ***characterized* in that** the parameters of said payment including at least the sum of the payment are reported to the seller along with the result of said comparison of the ciphers.

18. The method according to claim 16, ***characterized* in that** in the case of reporting, in addition to said payment, said number of the order to the transit bank by the customer this number of the order received by the transit bank is reported to the seller along with the result of said comparison of the ciphers.

19. The method according to claims 1 or 7, ***characterized* in that** performed are steps of: providing a possibility of a primary check of the authenticity of cipher being reported to the seller by the customer; performing such check in the presence of the customer without referring to the transit bank, and then giving said commodity/work/service to the customer under condition of determining said authenticity by the seller.

20. The method according to claim 19, ***characterized* in that** performed are steps of: assigning the cipher with taking into consideration the requirements predetermined by the seller; and checking the cipher reported by the customer for meeting said requirements when giving said commodity/work/service to the customer.

21. The method according to claim 19, ***characterized* in that** performed are steps of: reporting a part of the cipher to the seller inter alia data after receiving by the transit bank the cipher assigned by the customer; and checking the presence of this part of the cipher in the cipher reported to the seller by the customer when giving said commodity/work/service to the customer.

22. The method according to claim 19, ***characterized* in that** performed are steps of: reporting, inter alia data, the data calculated by the transit bank according to defined algorithm on the basis of this cipher after receiving by the transit bank the cipher assigned by the customer; reporting also to the seller said algorithm along with said data; checking the coincidence of said data with the data obtained by applying said algorithm to the cipher reported to the seller by the customer, when giving said commodity/work/service to the customer.

23. The method according to claim 19, ***characterized* in that** performed are steps of: providing technical means to the transit bank and seller in order to create a control code on the basis of the cipher and defined parameters of the customer's payment; creating a primary control code using said technical means on the basis of that cipher and corresponding parameters of said payment after receiving by the transit bank said payment and the corresponding cipher assigned by the customer, and reporting then this primary control code to the seller, reporting said corresponding parameters of said payment to the seller; checking the coincidence of the control code created by the seller using the technical means on the basis of the cipher and said corresponding parameters of said payment being received from the customer with the primary control code received from the transit bank, when giving said commodity/work/service to the customer.

24. The method according to claim 19, ***characterized* in that** in the case of forming said order by the customer, performed are steps of: providing technical means to the transit bank and seller in order to create a control code on the basis of the cipher and defined parameters of the customer's payment; reporting to the transit bank the parameters of said payment necessary to calculate the control code; creating a primary control code using said technical means on the basis of the cipher and said corresponding parameters of said payment after receiving by the transit bank the cipher assigned by the customer, and reporting then this primary control code to the seller; checking the coincidence of the control code created by the seller using the technical means on the basis of the cipher and said corresponding parameters of said payment being received from the customer with the primary control code received from the transit bank, when giving said commodity/work/service to the customer.

25. The method according to claims 23 or 24, ***characterized in* that** updated versions of said technical means are provided to their users.

26. A method for clearing trading using a communication network, the method including steps of: placing a list of offered commodities/works/services into a seller's computer device connected to the communication network; indicating requisite elements of the account to pay for these commodities/works/services; viewing said list by a customer using a computer device connected to the seller's computer device via said communication network; paying by the customer for the commodity/work/service selected by said customer from said list; giving said commodity/work/service by the seller to the customer, ***characterized* in that** requisite elements of a separate account in a transit bank being indicated as said account; prior to the step of paying for the selected commodities/works/services the customers assign an individual cipher for each payment; to the customer and the transit bank are provided with technical means for creating a control code using said technical means on the basis of the cipher assigned for this payment; the step of giving said commodity/work/service to the customer is performed under condition of reporting said cipher by the customer to the seller, then reporting the cipher received from the customer to the transit bank; transferring money to the seller at the rate of the sum of said payment under condition of coinciding the control code created by the transit bank using said technical means on the basis of the cipher received from the seller with a primary control code.

27. The method according to claim 26, ***characterized* in that** the seller's computer device is owned by the seller or supplied to the seller for use.

28. The method according to claim 26, ***characterized* in that** performed are steps of: producing said technical means with possibility to use, inter alia, the defined parameters of the customer's payment to create the control code; utilizing, inter alia, the corresponding parameters of said payment to create the primary control code by the customer, utilizing, inter alia, the corresponding parameters of said payment to create by the transit bank the control code being compared with the primary control code.

29. The method according to claim 26, ***characterized* in that** the primary control code is indicated in the payment document accompanying said payment.

30. The method according to claim 26, ***characterized* in that** the primary control code is indicated multiply in said payment document.

31. The method according to claim 26, ***characterized* in that** after obtaining said payment to said separate account the parameters of that payment are reported to the seller, said parameters include at least the sum of that payment.

32. The method according to claim 26, ***characterized* in that** in order to get said commodity/work/service the copy of the payment document accompanying said payment is provided to the seller besides said cipher.

33. The method according to claim 26, ***characterized* in that**, using the customer's computer device, performed are steps of: forming the order to purchase said commodity/work/service and sending it to seller's computer device; confirming the receiving of said order by transmitting to the customer's computer device the corresponding message indicating the parameters of this order, said parameters including at least the cost of said order and/or the number of said order.

34. The method according to claim 33, ***characterized* in that** said cost of the order is calculated so that the set of predetermined digits of numerical expression of this cost of the order represent said number of the order.

35. The method according to claim 33, ***characterized* in that** after receiving said order by the seller said cost of the order and/or number of the order are also reported to the transit bank.

36. The method according to claim 33, ***characterized* in that** performed are steps of: including the created code of that order into said parameters being reported to the customer; giving said commodity/work/service to the customer including the case of reporting said code of the order to the seller by the customer.

37. The method according to claim 33, ***characterized* in that** performed are steps of: producing said technical means with possibility to use, inter alia, the defined parameters of the customer's payment to create the control code; including the parameters necessary to calculate the control code into the parameters of said order being reported to the customer; utilizing, inter alia, said necessary parameters of said order to create the primary control code by the customer; utilizing, inter alia, said necessary parameters of said order to create by the transit bank the control code being compared with the primary control code.

38. The method according to claim 33, ***characterized* in that** in the case of receiving said number of the order by the customer from the seller this number of the order is reported to the transit bank in addition to said payment.

39. The method according to claim 38, ***characterized* in that** said number of the order is indicated in the payment document accompanying said payment.

40. The method according to claim 39, ***characterized* in that** said number of the order is indicated multiply in said payment document.

41. The method according to claim 38, ***characterized* in that** after receiving said number of the order by the transit bank from the customer this number of the order is reported to the seller.

42. The method according to claim 38, ***characterized* in that** performed are steps of: reporting said number of the order to the transit bank along with the cipher received from the customer; then transferring said money to the seller including the case of coinciding this number of the order with the number of the order received by the transit bank from the customer.

43. The method according to claims 26, or 28, or 37, or 38, ***characterized* in that** performed are steps of: sending, in the presence of the customer, the cipher received from the customer to the transit bank for checking, when providing said commodity/work/service to the customer; and then giving said commodity/work/service to the customer under condition of reporting to the seller by the transit bank the identity of the control code created by the transit bank using said technical means on the basis of the corresponding data to the primary control code.

44. The method according to claims 26, or 28, or 37, or 38, ***characterized* in that** performed are steps of: providing the said technical means also to the seller: reporting, if necessary, the parameters of said payment necessary for calculating the control code to the seller; reporting the control code created using said technical means on the basis of the corresponding data to the transit bank, when providing said commodity/work/service to the customer; and then giving said commodity/work/service to the customer under condition of reporting by the transit bank to the seller the identity of the control code received from the seller to the primary control code.

45. The method according to claims 43 or 44, ***characterized* in that** the parameters of said payment including at least the sum of this payment are reported also to the seller along with the result of said check.

46. The method according to claims 43 or 44, ***characterized* in that** in the case of reporting to the transit bank by the seller said number of the order in addition to said payment, the number of the order received by the transit bank from the customer is reported also to the seller along with the result of said check.

47. The method according to claims 26, or 28, or 37, ***characterized* in that** performed are steps of: providing a possibility of primary check of the authenticity of cipher being reported to the seller by the customer; performing such check in the presence of the customer without referring to the transit bank; and then giving said commodity/work/service to the customer under condition of determining said authenticity by the seller.

48. The method according to claim 47, ***characterized* in that** performed are steps of: assigning the cipher with taking into consideration the requirements predetermined by the seller; and checking the cipher reported by the customer to the seller for meeting these requirements.

49. The method according to claim 47, ***characterized* in that** performed are steps of: providing said technical means also to the seller; reporting, if necessary, the parameters of said payment necessary to calculate the control code to the seller; reporting this primary control code to the seller after receiving by the transit bank said payment and the primary control code; checking the coincidence of the control code created by the seller using said technical means on the basis of corresponding data with the primary control code, when providing said commodity/work/service to the customer.

50. The method according to claim 49, ***characterized* in that** performed are steps of: reporting only a part of the primary control code to the seller; and checking the presence of said part of the primary control code in said control code created by the seller, when giving said commodity/work/service to the customer.

51. The method according to claims 26, or 28, or 37, or 44, or 49, ***characterized* in that** updated versions of said technical means are provided to their users.

52. A method for clearing trading using a communication network, the method including steps of: placing a list of offered commodities/works/services into a seller's computer device connected to the communication network; indicating requisite elements of the account to pay for these commodities/works/services; viewing said list by a customer using a computer device connected to the seller's computer device via said communication network; paying by the customer for the commodity/work/service selected by said customer from said list; giving said commodity/work/service by the seller to the customer, ***characterized* in that** requisite elements of a separate account in a transit bank being indicated as said account; providing technical means to the customer to create an analog of the autographic signature; providing technical means to the transit bank for verifying the analog of the autographic signature; in order to pay for said order the payment is effected to said separate account; giving said commodity/work/service to the customer under condition of providing by the customer the analog of the customer' autographic signature to the seller, said signature being created for every transaction using said corresponding technical means; then, in order to receive the money, providing the analog of the autographic signature received from the customer to the transit bank; transferring money to the seller at the rate of the sum of said payment under condition of successful verification of the analog of the autographic signature received from the customer using said corresponding technical means.

53. The method according to claim 52, ***characterized* in that** the seller's computer device is owned by the seller or supplied to the seller for use.

54. The method according to claim 52, ***characterized* in that** after obtaining said payment to said separate account the parameters of that payment are reported to the seller, said parameters include at least the sum of this payment.

55. The method according to claim 52, ***characterized* in that** is that in order to get said commodity/work/service, the copy of the payment document accompanying said payment is provided to the seller besides said cipher.

56. The method according to claim 52, ***characterized* in that** using the customer's computer device performed are steps of: forming the order to purchase said commodity/work/service and sending it to seller's computer device; confirming the receiving of said order by transmitting to the customer's computer device the corresponding message being indicating the parameters of this order, said parameters including at least the cost of this order and/or the number of the order.

57. The method according to claim 56, ***characterized* in that** said cost of the order is calculated so that the set of predetermined digits of numerical expression of this cost of the order represent said number of the order.

58. The method according to claim 56, ***characterized* in that** after receiving said order by the seller said cost of the order and/or number of the order are also reported to the transit bank.

59. The method according to claim 56, ***characterized* in that** performed are steps of: including the created code of that order into said parameters being reported to the customer; giving said commodity/work/service to the customer including the case of reporting said code of the order to the seller by the customer.

60. The method according to claim 56, ***characterized* in that** in the case of receiving said number of the order by the customer from the seller that number of the order is reported to the transit bank in addition to said payment.

61. The method according to claim 60, ***characterized* in that** said number of the order is indicated in the payment document accompanying said payment.

62. The method according to claim 61, ***characterized* in that** said number of the order is indicated multiply in said payment document.

63. The method according to claim 60, ***characterized* in that** after receiving said number of the order by the transit bank from the customer this number of the order is reported to the seller.

64. The method according to claim 60, ***characterized* in that** performed are steps of: reporting said number of the order to the transit bank along with the analog of the autographic signature received from the customer; then transferring said money to the seller including the case of coinciding this number of the order with the number of the order received by the transit bank from the customer.

65. The method according to claim 52, ***characterized* in that** performed are steps of: sending the analog of the autographic signature received from the customer to the transit bank for verifying, when giving said commodity/work/service to the customer; and then giving said commodity/work/service to the customer under condition of reporting to the seller by the transit bank about successful verification of this analog of the autographic signature by the transit bank.

66. The method according to claim 52, ***characterized* in that** an updated version of said technical means for creating the analog of the autographic signature are provided to the customer.

67. The method according to claim 52, ***characterized* in that** an updated version of said technical means for creating the analog of the autographic signature are provided to the transit bank.

68. The method according to claim 52, ***characterized* in that** performed are steps of: providing to the transit bank the updated version of said technical means for creating the analog of the autographic signature; verifying the analog of the autographic signature received from the customer using these technical means; giving said commodity/work/service to the customer under condition of successful finishing said verification.

69. The method according to claim 68, ***characterized* in that** the updated version of said technical means for verifying the analog of the autographic signature is provided to the seller.
